# EUROPÄISCHE PATENTSCHRIFT

(11) **EP 1 554 150 B1**
(45) Veröffentlichungstag und Bekanntmachung des Hinweises auf die Patenterteilung: **05.09.2012**
(21) Anmeldenummer: 03775046.0
(22) Anmeldetag: 04.10.2003
(51) Int. Cl.: B60J 7/20

(54) **VERDECKKASTENDECKEL FÜR EIN CABRIOLET-FAHRZEUG MIT VERSENKBAREM VERDECK**
HOOD COMPARTMENT COVER FOR A CABRIOLET VEHICLE WITH A RETRACTABLE HOOD
COUVERCLE DE CAISSON DE CAPOTE DE VEHICULE CABRIOLET COMPORTANT UNE CAPOTE ESCAMOTABLE

(30) Priorität: 12.10.2002 DE 10247725
(43) Veröffentlichungstag der Anmeldung: 20.07.2005
(73) Patentinhaber: Wilhelm Karmann GmbH, 49084 Osnabrück (DE)
(72) Erfinder: HABACKER, Norbert, 49565 Bramsche (DE)
(74) Vertreter: Kronthaler, Schmidt & Coll.
(86) Internationale Anmeldenummer: PCT/DE2003/003280
(87) Internationale Veröffentlichungsnummer: WO 2004/035337

(56) Entgegenhaltungen:
- EP-A- 0 638 453
- DE-A- 19 912 893
- DE-C- 19 959 700

## Beschreibung

Die Erfindung betrifft ein Cabriolet-Fahrzeug mit versenkbarem Verdeck, insbesondere einem Faltverdeck, gemäß dem Oberbegriff des Anspruchs 1.

Bei einem bekannten Cabriolet-Fahrzeug (EP 0 638 453 B1) ist ein dessen Faltverdeck in Öffnungsstellung heckseitig aufnehmender Verdeckkasten vorgesehen, der durch einen Verdeckkastendeckel verschließbar ist. Für dessen Bewegung ist ein einziger, zentral im Heckbereich des Fahrzeugs angeordneter Antrieb vorgesehen, mit dem eine Stellbewegung über Umlenkbaugruppen so auf zwei Scharniervorrichtungen am hinteren Randbereich des Verdeckkastendeckels übertragen wird, daß der Verdeckkastendeckel in seine Öffnungsstellung hoch- und aus dieser rückschwenkbar ist. Dabei kann der Verdeckkastendeckel bei seiner Rückschwenkung in die Schließstellung so bewegt werden, daß in dieser Bewegungsphase ein Verdeckspannbügel erfaßbar wird und damit das mit diesem verbundene Faltverdeck gemeinsam mit dem Verdeckkastendeckel durch eine Schwenk-Schub-Bewegung im Bereich einer Schließvorrichtung festgelegt wird. Durch die vom Antrieb als Zwischenglieder zu betätigenden Bewegungsbaugruppen ist diese Antriebskinematik aufwändig herzustellen und erfordert einen großen Einbauraum.

Aus der DE-199 59 700 C1 ist ein Cabirolet-Fahrzeug bekannt, bei der ein Verdeckkastendeckel an einer Scharniervorrichtung schwenkbeweglich an der Karosserie festgelegt ist und der über eine Hubeinrichtung aus einer den Verdeckkastendeckel abschließenden Schließstellung in eine den Verdeckkastendeckel freigebende Öffnungsstellung zu überführen ist. Dabei ist der Hubantrieb schwenkbeweglich an der Karosserie festgelegt und über einen schwenkbaren Verbindungshebel mit dem Verdeckkastendeckel verbunden. Die Scharniereinrichtung ist derart aufgebaut, dass in einer unteren Schließstellung mittels eines über Seilzüge freigebbaren Schließbolzens arretierbar und zudem in einer aufgestellten Position in der Gelenkvorrichtung über einen durch ein Seilzug betätigbaren Schließbolzen arretierbar ist. Dadurch ist der Kofferraumdeckel in eine erhöhte aufgestellte Öffnungsposition zu überführen und zu verriegeln.

Bei diesem Cabriolet-Fahrzeug ist jedoch ein Verdeckspannbügel nicht vorgesehen, so dass auch ein Verdeckspannbügel und der Verdeckkastendeckel nicht miteinander in Wirkverbindung stehen können. Wenn bei diesem Cabriolet-Fahrzeug zusätzlich ein Verdeckspannbügel mit den dazugehörigen Antriebs- und Verriegelungskomponenten vorgesehen werden soll, sind entsprechende zusätzliche Bauteile mit ihren Antriebs- und Verriegelungskonzepten vorzusehen. Dies erfordert wiederum weitere zusätzliche Bauteile, die ihrerseits einen erheblichen Bauraum und aufwändige Antriebs- und Steuerungskonzepte erforderlich machen.

Der Erfindung liegt die Aufgabe zugrunde, ein Cabriolet-Fahrzeug der eingangs genannten Art dahingehend weiter zu bilden, dass der Verdeckkastendeckel mit geringem technischen Aufwand eine Synchronisation seiner Bewegung mit der Bewegung des Verdecks ermöglicht und dabei wenige Teile der Antriebskinematik an einen engen Einbauraum innerhalb des Fahrzeugs optimal anpassbar sind.

Ausgehend von einem Cabriolet-Fahrzeug der eingangs genannten Art löst die Erfindung diese Aufgabe mit den Merkmalen des Anspruchs 1. Hinsichtlich wesentlicher weiterer Ausgestaltungen wird auf die Ansprüche 2 bis 19 verwiesen.

Das erfindungsgemäß ausgebildete Cabriolet-Fahrzeug weist im Bereich seines Verdeckkastendeckels eine Verdeckkinematik mit einer Führungseinheit auf, bei der mittels eines Stellgliedes ein am Verdeckkastendeckel angreifender hydraulischer Hubantrieb und eine in Abstand zu diesem heckseitig abgestützte Scharniervorrichtung mit wenigen Gelenkteilen als funktionale Bauteilreihe optimal zusammenwirken. Dabei kaum eine Schließvorrichtung sowohl einem Verdeckspannbügel als auch einem Verdeckkastendeckel zugeordnet sein, so dass in deren Bereich der Verdeckkastendeckel mit einem Verdeckspannbügel durch eine Schwenk-Schubbewegung verriegelbar bzw. in entgegengesetzter Richtung entriegelbar ist. Insgesamt ist damit ein Cabriolet-Fahrzeug geschaffen, bei dem mit wenigen Teilen der Antriebskinematik in einem relativ engen Einbauraum die Bewegung des Verdeckkastendeckels und eines Verdeckspannbügels durchführbar sind.

Der Verdeckkastendeckel weist mit seinen jeweils verwindungssteif an dessen Unterseite abgestützten Stellgliedern und den jeweils an diesen anderenends gelenkig angreifenden Hubantrieb nur zwei spiegelbildlich zur Fahrzeuglängsmittelebene angeordnete Antriebe auf, wobei der Verdeckkastendeckel unmittelbar in den bei dessen Bewegung wirksamen Kraftfluß integriert ist. Mit diesem Schwenksystem wird mit geringem Aufwand und wenigen Teilen eine optimale Steuerung sowohl in einer zum Lösen bzw. Verriegeln notwendigen ersten Schub-Bewegungsphase als auch in einer zur vollständigen Freigabe bzw. Abdeckung des Verdeckkastens notwendigen zweiten Schwenk-Bewegungsphase erreicht.

Das Antriebskonzept weist wenige Bauteile auf und kann insgesamt belastungsoptimal ausgelegt werden, so daß sich durch gleichmäßige Kraftumlenkungen eine vorzögerungsfreie Bewegung ergibt, mit der eine geringe Verschleißanfälligkeit und eine hohe Lebensdauer der Baugruppen gewährleistet sind.

Weitere Einzelheiten und vorteilhafte Ausgestaltungen des erfindungsgemäßen Cabriolet-Fahrzeuges ergeben sich aus der nachfolgenden Beschreibung und der Zeichnung, in der ein Ausführungsbeispiel eines erfindungsgemäß verlagerbaren Verdeckkastendeckels schematisch veranschaulicht ist. In der Zeichnung zeigen:
- Fig. 1: eine perspektivische Heckansicht eines Cabriolet-Fahrzeuges mit einem Faltverdeck in Schließstellung,
- Fig. 2: eine schematische Seitenansicht der Antriebskinematik im Heckbereich des Fahrzeugs (ohne Dachhaut des Faltverdecks) gemäß einer Linie II-II in Fig. 1,
- Fig. 3: eine Seitenansicht ähnlich Fig. 2 mit Verdeckstoffspannbügel und Verdeckkastendeckel in einer ersten Öffnungsphase, und
- Fig. 4: eine Seitenansicht ähnlich Fig. 3 mit dem Verdeckstoffspannbügel mit Heckscheibe und dem Verdeckkastendeckel in einer gegensinnig aufgeschwenkten Öffnungsstellung.

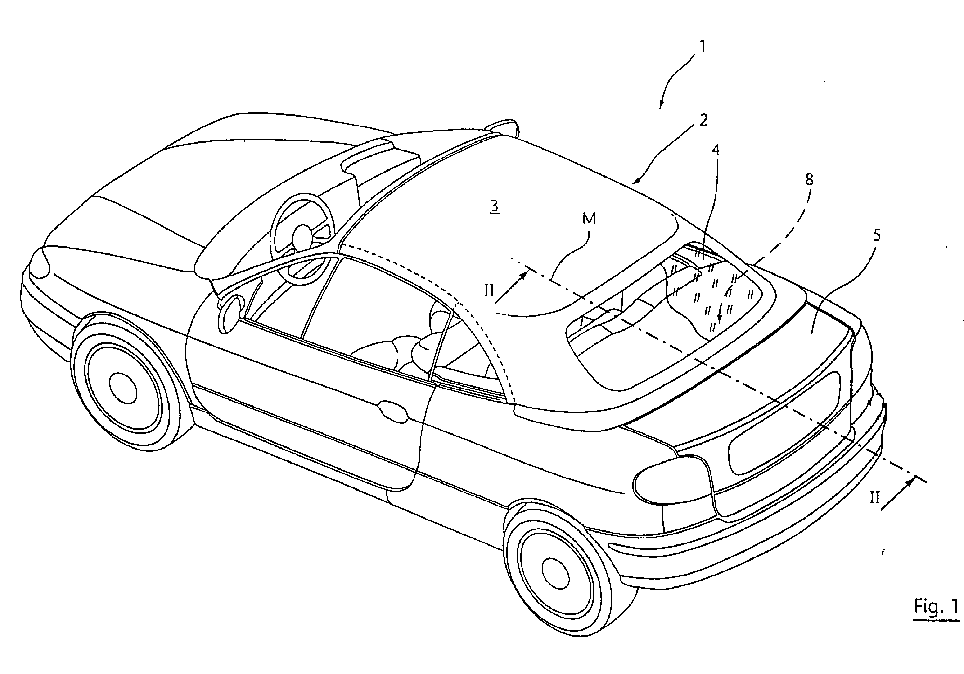

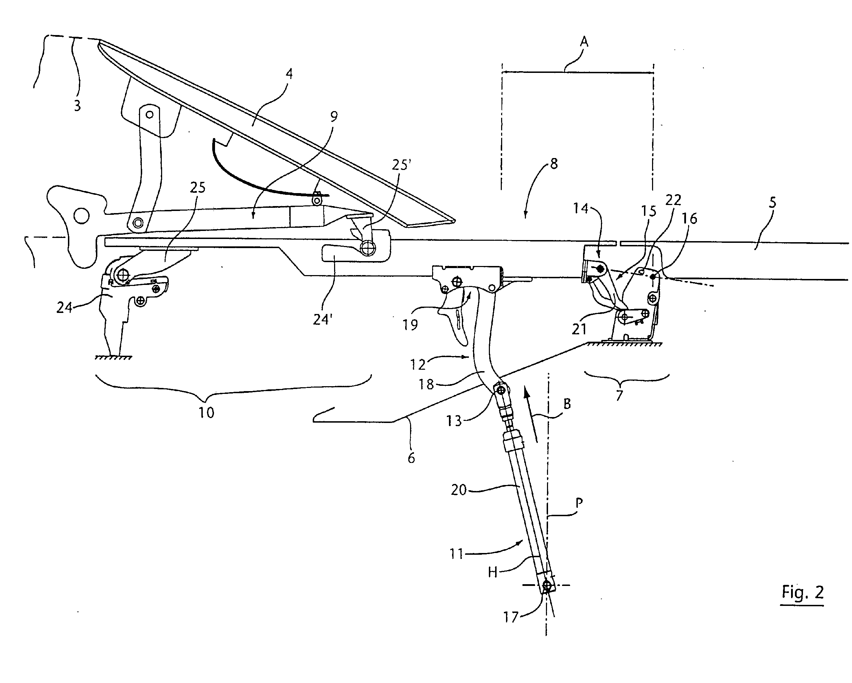

In Fig. 1 ist insgesamt mit 1 bezeichnetes Cabriolet-Fahrzeug in einer Perspektivdarstellung veranschaulicht, wobei dessen geschlossenes Faltverdeck 2 eine in die Dachhaut 3 integrierte Heckscheibe 4 aufweist. In der dargestellten Schließstellung ist die Dachhaut 3 in ihrem heckseitigem Bereich unterhalb der Heckscheibe 4 auf einem mit einem Kofferraumdeckel 5 in einer Ebene befindlichen Verdeckkastendeckel 8 (Fig. 2) abgelegt. Mit diesem im wesentlich U-förmig in der heckseitigen Karosseriekontur verlaufenden Verdeckkastendeckel 8 ist ein zur Aufnahme des Verdecks 2 vorgesehener Verdeckkasten 6 verschließbar. Nachfolgend sind die kinematischen Bauteile prinzipiell veranschaulicht, wobei die Fahrzeugkarosserie und der Aufbau des Faltverdecks 2 im Bereich der Dachhaut 3 nicht dargestellt sind.

Der Verdeckkastendeckel 8 ist mittels jeweiliger zur Fahrzeuglängsmittelebene M spiegelbildlich gegenüberliegender Scharniervorrichtungen 7 (bzw. 7', in den Seitenansichten gemäß Fig. 2 bis 4 nicht näher dargestellt) an der Fahrzeugkarosserie schwenkbar abgestützt. In Fahrtrichtung nach vorn wirkt der Verdeckkastendeckel 8 mit zumindest einer im Bereich eines randseitigen Verdeckstoffspannbügels 9 vorgesehenen Schließvorrichtung 10 zusammen. Aus EP 0 638 453 B1 ist bekannt, daß im Bereich derartiger Schließvorrichtungen 10 der Verdeckkastendeckel 8 mit dem Verdeckstoffspannbügel 9 durch eine Schwenk-Schub-Bewegung verriegelbar bzw. in entgegengesetzter Richtung entriegelbar ist.

Zur Realisierung dieser Bewegung weist das Cabriolet-Fahrzeug 1 in erfindungsgemäßer Ausführung einen Verdeckkastendeckel 8 auf, der randseitig mit jeweils einem Hubantrieb 11 bzw. 11' (in den Schnittdarstellungen ist nur dieser eine sichtbar) versehen ist, der in einem Abstand A vor der jeweiligen Scharniervorrichtung 7 den Verdeckkastendeckel 8 untergreift. Der Hubantrieb 11 greift dabei mit im wesentlichen vertikaler Hubachse. H an einem mit dem Verdeckkastendeckel 8 verbundenen Stellglied 12 im Bereich einer Gelenkverbindung 13 an. Mit diesem nur wenige Bauteile aufweisenden Antriebskonzept wird erreicht, daß der Verdeckkastendeckel 8 auf einer im wesentlichen durch das Stellglied 12 des Hubantriebes 11 und die Scharniervorrichtung 7 geführten Bewegungsbahn geschwenkt werden kann.

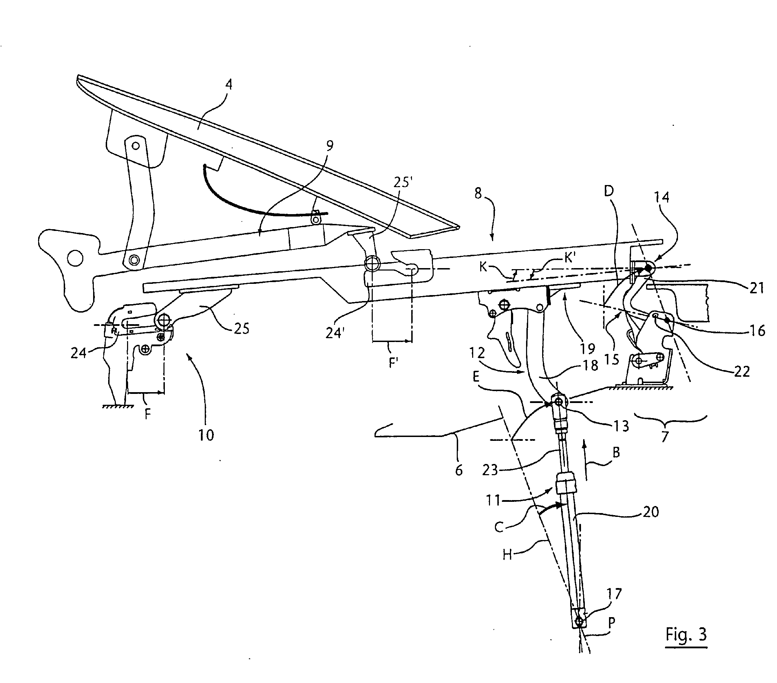

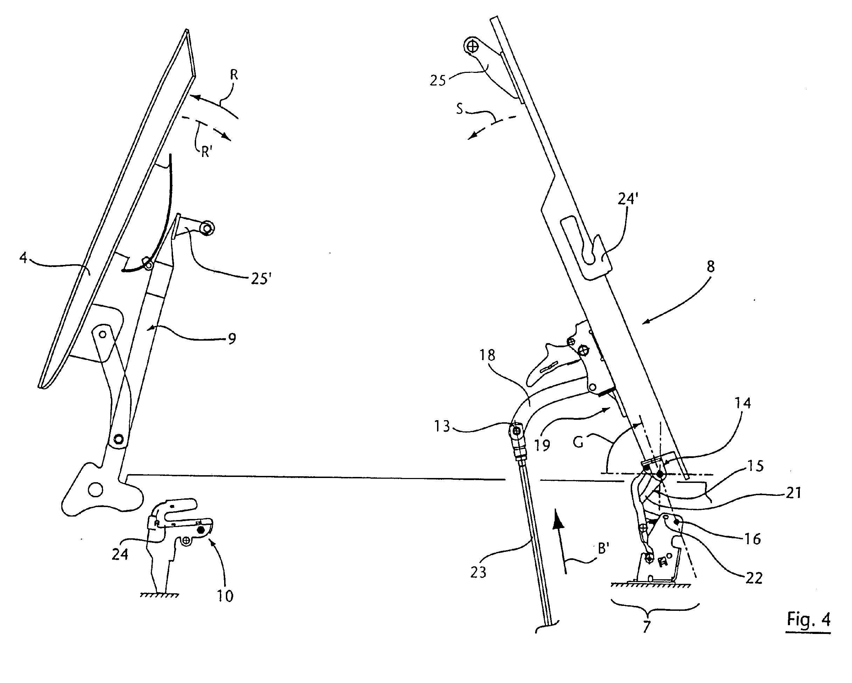

Dabei ist zunächst eine erste Relativbewegung des Verdeckkastendeckels 8 aus einer schräg geneigten Ausrichtung in eine in etwa Horizontalausrichtung durchführbar (Pfeil K in Fig. 3). Darüber hinaus ist eine weitere Relativbewegung zum Tragteil 15 realisierbar, nämlich aus der Horizontalausrichtung in schräg nach oben ausgerichtete Öffnungsstellung (Pfeil G in Fig. 4).

Das Stellglied 12 bildet mit der Scharniervorrichtung 7 eine funktional verbundene Führungseinheit, die zumindest drei Gelenke aufweist. Diese sind in einer Reihenanordnung verbunden, die die Anlenkung 13 des Hubantriebes 11 am Stellglied 12, eine Schwenkverbindung 14 des Verdeckkastendeckels 8 mit einem Tragteil 15 der Scharniervorrichtung 7 sowie deren Schwenkabstützung 16 für das Tragteil 15 als jeweilige Gelenke umfaßt.

Von funktionaler Bedeutung ist dabei, daß auch der Hubantrieb 11 eine dessen Schwenkung um eine vertikale Hochachse P ermöglichende Gelenkverbindung 17 am unteren Heckbereich der Fahrzeugkarosserie aufweist (Fig. 3). Der Hubantrieb 11 ist dabei an seinem der Gelenkverbindung 13 zum Stellglied 12 gegenüberliegenden Ende an einer nicht näher dargestellten Gelenkstütze schwenkbar gehalten, wobei auch andere Lagerungen denkbar sind. Mit dieser Stützkonstruktion ist der Hubantrieb 11 jeweils parallel zur Fahrzeuglängsmittelebene M schwenkbar, wie dies in Fig. 3 mit einem Pfeil C veranschaulicht ist.

In der dargestellten Ausführungsform weist der Verdeckkastendeckel 8 als Hubantrieb 11 einen Hydraulikzylinder 20 auf, der an einem als Stellglied 12 vorgesehenen Hebelarm 18 mit bogenförmiger Längskontur angelenkt ist. Dieser Hebelarm 18 ist an seinem dem Hydraulikzylinder 20 bzw. dessen Anlenkung 13 gegenüberliegenden Ende mit der Unterseite des Verdeckkastendeckels 8 durch Tragteile 19 ortsfest und verwindungssteif verbunden.

Der mit dem angelenkten Hydraulikzylinder 20 versehene Hebelarm 18 ist insbesondere im Bereich zwischen der vorderseitigen Schließvorrichtung 10 und der heckseitigen Scharniervorrichtung 7 so abgestützt, daß diese bei Einleitung einer Stellbewegung (Pfeil B) optimal zu betätigen ist und gleichzeitig die im Abstand A zum Hubeinleitungsbereich befindliche Scharniervorrichtung 7 die Stellkräfte belastungsoptimal aufnehmen und umsetzen kann.

In Fig. 2 ist die Schließstellung der Baugruppen vor dem Öffnen des Verdeckkastendeckels 8 dargestellt, der bei nachfolgender Aktivierung des Hubantriebes 11 (Fig. 3, Pfeil B) zwei im wesentlichen kontinuierlich ineinander übergehende Bewegungsphasen durchläuft. Die mit der ersten Bewegungsphase erreichte Zwischenstellung ist in Fig. 3 dargestellt und die kontinuierlich anschließende zweite Bewegungsphase wird in der Darstellung gemäß Fig. 4 mit der endgültigen Öffnungsposition deutlich.

In der ersten Bewegungsphase wird der Hydraulikzylinder 20 in Pfeilrichtung B betätigt und damit über den Stützhebel 18 eine Hubkraft in den Verdeckkastendeckel 8 eingeleitet (Fig. 2). Die bisher im Bereich der Schließvorrichtung 10 in einer Verbindungsstellung ineinandergreifenden Bauteile werden dabei aus ihrer Haltestellung dadurch gelöst, daß bei Fortsetzung der Hubbewegung (Fig. 3) die mit einem Pfeil D dargestellte Schwenk-Schub-Bewegung im Bereich der Scharniervorrichtung 7 eingeleitet wird. Gleichzeitig wird dem in Pfeilrichtung C verlagerbaren Hydraulikzylinder 20 im Bereich seiner zum Stützhebel 18 gerichteten Gelenkverbindung 13 die durch einen Pfeil E dargestellte Bewegungsbahn vermittelt.

Durch diese die Bewegungskomponenten D und E aufweisende Führung wird der Verdeckkastendeckel 8 angehoben und verschoben, so daß im Bereich der Schließvorrichtung 10 gleichzeitig eine im wesentlichen horizontale Entriegelungsbewegung gemäß den Pfeilen F und F' erreicht ist. Durch die Schwenkung im Bereich der Verbindung 14 des Verdeckkastendeckels 8 am Tragteil 15 der Scharniervorrichtung 7 ist gewährleistet, daß synchron mit den Bewegungen D und E eine Relativbewegung (Pfeil K) erfolgen kann und durch eine endseitige Kippung des Verdeckkastendeckels 8 (Fig. 3) eine optimale Steuerung im Bereich der Gelenk-Reihe 17, 13, 14, 16 erfolgt.

Für diese Bewegungssteuerung weist die Scharniervorrichtung 7 als den Verdeckkastendeckel 8 gelenkig abstützendes Tragteil 15 einen L-förmigen Schwenkhebel 21 auf, der in dieser ersten Öffnungsphase gemäß Fig. 3 bis zu einem Anschlag 22 verlagerbar und an diesem anlegbar ist. Dabei wirkt die von Hubantrieb 11 und Scharniervorrichtung 7 gebildete Führungseinheit zumindest phasenweise synchron mit der Schließvorrichtung 10 zusammen, so daß eine gleichmäßige und kontinuierliche Verlagerung des Verdeckkastendeckels 8 erfolgt und sämtliche Lagerbaugruppen durch ruckfreie Bewegungen gering belastet sind.

Die in Fig. 4 dargestellte zweite Bewegungsphase zeigt, daß zur Erreichung einer vollständigen Öffnungsstellung des Verdeckkastendeckels 8 nunmehr die Kolbenstange 23 des Hydraulikzylinders 2 in Pfeilrichtung B' weiter ausfährt und dabei nur noch eine Schwenkbewegung gemäß Pfeil G um das Gelenk 14 am Tragteil 15 der Scharniervorrichtung 7 erfolgt. Zuvor kann das Faltverdeck 1 über nicht dargestellte Antriebe im Bereich der Heckscheibe 4 und des Verdeckstoffspannbügels 9 ebenfalls hochgeschwenkt (Pfeil R) und danach das Faltverdeck 4 in den Verdeckkasten 6 eingeschwenkt werden (Pfeil R').

Es versteht sich, daß bei einer Schließbewegung des Verdeckkastendeckels 8 (über das innenliegende Verdeck oder bei dessen Schließstellung) der vorbeschriebene kontinuierliche Bewegungsablauf in umgekehrter Folge abläuft, wobei mit einem Pfeil S der Bewegungsbeginn nur angedeutet ist, ohne die weiteren Teil-Bewegungen nochmals darzustellen.

Die vorderseitig am Verdeckkastendeckel 8 vorgesehene Schließvorrichtung 10 ist von zwei jeweils ein Gegenlager 24, 24' und einen Fanghaken 25, 25' aufweisenden Baugruppen gebildet, wobei die Teile 24 und 25 eine Verbindung des Verdeckkastendeckels 8 zur Fahrzeugkarosserie bilden und die Teile 24' und 25' als Verbindung zum Verdeckstoffspannbügel 9 vorgesehen sind. Die beiden Gegenlager und 24 und 24' der beiden Schließ-Baugruppen sind dabei jeweils als Kulissenführungen ausgebildet, in denen die Fanghaken 25, 25' während der ersten Bewegungsphase (Fig. 3) gemäß Pfeil F und F' geführt sind.

In zweckmäßiger Ausführung sind im Bereich der Schließ-Baugruppen jeweilige mit zumindest einem die Position des jeweiligen Fanghakens 25, 25' erfassenden Tastsensor (nicht dargestellt) versehen. Zur Anpassung dieser Schließ-Baugruppen an die Führungseinheit von Hubantrieb 11 und Scharniervorrichtung 7 können im Bereich der Kulissenführungen einstellbare Führungsbauteile vorgesehen, so daß die Schließvorrichtung 10 sowohl bei der Öffnungs- als auch bei der Schließbewegung eine optimale Führung gewährleisten und insbesondere beim Schließen des Faltverdecks 1 eine für die Dichtigkeit des Systems mit der auf dem Verdeckstoffspannbügel 3 aufliegenden Heckscheibe 4 optimale Spannkraft erzeugt werden kann.

## Patentansprüche

1. Cabriolet-Fahrzeug mit versenkbarem Verdeck, insbesondere Faltverdeck (2), mit einem dieses in Öffnungsstellung aufnehmenden Verdeckkasten (6), der durch einen in der heckseitigen Karosseriekontur verlaufenden Verdeckkastendeckel (8) verschließbar ist, der einerseits mittels zumindest einer Scharniervorrichtung (7) mit einem Tragteil (15) an der Fahrzeugkarosserie schwenkbar abgestützt ist und andererseits zum Faltverdeck (2) hin mit zumindest einer im Bereich eines randseitigen Verdeckstoffspannbügels (9) des Verdecks (2) vorgesehenen Schließvorrichtung (10) zusammenwirkt, in deren Bereich der Verdeckkastendeckel (8) mit dem Verdeckstoffspannbügel (9) durch eine Schwenk-Schub-Bewegung verriegelbar bzw. in entgegengesetzter Richtung entriegelbar ist, **dadurch gekennzeichnet, daß** als Antrieb des Verdeckkastendeckels (8) zumindest ein mit einem Abstand (A) zur Scharniervorrichtung (7) abgestützter, schwenkbeweglich mit dem Verdeckkastendeckel (8) verbundener Hubantrieb (11) vorgesehen ist, der eine dessen Schwenkbewegung um eine vertikale Hochachse (P) ermöglichende Gelenkverbindung (17) am unteren Heckbereich der Karosserie aufweist, und dass der Verdeckkastendeckel (8) im Bereich der Scharniervorrichtung (7) relativ zum Tragteil (15) schwenkbar (Pfeil D, Pfeil K) ausgebildet ist, derart, daß in einer ersten Bewegungsphase über den Hubantrieb (11) eine Hubkraft (B) in den Verdeckkastendeckel eingeleitet wird, dabei bisher im Bereich einer Schließvorrichtung (10) in einer Verbindungsstellung ineinandergreifende Bauteile aus ihrer Haltestellung dadurch gelöst werden (Pfeil F), dass bei Fortsetzung der Hubbewegung mittels des Verdeckkastendeckels (8) eine Schwenk-Schub-Bewegung (Pfeil D, K) im Bereich der Scharniereinrichtung (7) eingeleitet wird.

2. Cabriolet-Fahrzeug nach Anspruch 1, **dadurch gekennzeichnet, daß** der Hubantrieb (11) mit dem Verdeckkastendeckel (8) über ein Stellglied (12) an diesem angelenkt ist.

3. Cabriolet-Fahrzeug nach Anspruch 1 oder 2, **dadurch gekennzeichnet, daß** der Verdeckkastendeckel (8) und das Tragteil (15) gemeinsam und relativ zueinander verschwenkbar sind.

4. Cabriolet-Fahrzeug nach einem der Ansprüche 2 bis 3, **dadurch gekennzeichnet, daß** der Verdeckkastendeckel (8) auf einer im wesentlichen durch das Stellglied (12) des Hubantriebes (11) und das Tragteil (15) der Scharniervorrichtung (7) bestimmten Bewegungsbahn (D, G, K, K') verlagerbar ist.

5. Cabriolet-Fahrzeug nach einem der Ansprüche 2 bis 4, **dadurch gekennzeichnet, daß** die jeweils aus Stellglied (12) und Scharniervorrichtung (7) gebildete Führungseinheit zumindest drei Gelenke aufweist, wobei eine Anlenkung (13) des Hubantriebes (11) am den Verdeckkastendeckel (8) abstützenden Stellglied (12), eine Schwenkverbindung (14) des Verdeckkastendeckels (8) mit dem Tragteil (15) der Scharniervorrichtung (7) sowie eine ihrerseits vorgesehene Schwenkabstützung (16) für das Tragteil (15) als eine Reihenanordnung von Gelenken vorgesehen sind.

6. Cabriolet-Fahrzeug nach dem Anspruch 5, **dadurch gekennzeichnet, daß** die Reihenanordnung mehr als drei gemeinsam wirksame Gelenke (13, 14, 16, 17) aufweist und diese Teil-Bewegungsbahnen (D, E, F, G, K, K') der Gelenk-Kinematik definieren.

7. Cabriolet-Fahrzeug nach einem der Ansprüche 1 bis 6, **dadurch gekennzeichnet, daß** der eine Hubachse (H) aufweisende Hubantrieb (11) mit einer dessen Verschwenkung (Pfeil C) um eine vertikale Stützachse (P) ermöglichenden Gelenkverbindung (17) im unteren Heckbereich der Fahrzeugkarosserie abgestützt ist.

8. Cabriolet-Fahrzeug nach Anspruch 5, **dadurch gekennzeichnet, daß** der Hubantrieb (11) jeweils an seinem der Gelenkverbindung (13) zum Stellglied (12) gegenüberliegenden Ende schwenkbar gehalten ist.

9. Cabriolet-Fahrzeug nach Anspruch 7 oder 8, **dadurch gekennzeichnet, daß** der Hubantrieb (11) parallel zur Fahrzeuglängsmittelebene (M) schwenkbar ist.

10. Cabriolet-Fahrzeug nach Anspruch 9, **dadurch gekennzeichnet, daß** der Verdeckkastendeckel (8) als Hubantrieb (11) zumindest einen Hydraulikzylinder (20) aufweist, der an einem als Stellglied (12) vorgesehenen Hebelarm (18) angelenkt ist, der andererseits mit der Unterseite des Verdeckkastendeckels (8) ortsfest verbunden ist.

11. Cabriolet-Fahrzeug nach dem Anspruch 10, **dadurch gekennzeichnet, daß** der mit dem angelenkten Hubantrieb (11) versehene Hebelarm (18) im Bereich zwischen der vorderseitigen Schließvorrichtung (10) und der heckseitigen Scharniervorrichtung (7) am Verdeckkastendeckel (8) abgestützt ist.

12. Cabriolet-Fahrzeug nach einem der Ansprüche 1 bis 11, **dadurch gekennzeichnet, daß** die Scharniervorrichtung (7) als den Verdeckkastendeckel (8) gelenkig abstützendes Tragteil (15) einen L-förmigen Schwenkheber (21) aufweist, der in der Öffnungsphase (Bahn D) an einem Anschlag (22) anlegbar und in der Schließphase von diesem wegschwenkbar ist.

13. Cabriolet-Fahrzeug nach einem der Ansprüche 1 bis 12, **dadurch gekennzeichnet, daß** dem Verdeckkastendeckel (8) bei Aktivierung des Hubantriebes (11) zwei im wesentlichen kontinuierlich ineinander übergehende Bewegungsphasen (D und G) vermittelbar sind.

14. Cabriolet-Fahrzeug nach einem der Ansprüche 1 bis 13, **dadurch gekennzeichnet, daß** die jeweilige Bewegung des Verdeckkastendeckels (8) im Bereich der zum Verdeckstoffspannbügel (9) vorgesehenen Schließvorrichtung(en) (10) zumindest phasenweise als diese ver- bzw. entriegelnde Schub-Bewegung (F, F') wirksam ist.

15. Cabriolet-Fahrzeug nach einem der Ansprüche 1 bis 14, **dadurch gekennzeichnet, daß** die jeweils von Hubantrieb (11) und Scharniervorrichtung (7) gebildete Führungseinheit zumindest phasenweise bei der Öffnungs- bzw. Schließbewegung synchron mit den verlagerbaren Teilen der Schließvorrichtungen (10) zusammenwirkt.

16. Cabriolet-Fahrzeug nach einem der Ansprüche 1 bis 15, **dadurch gekennzeichnet, daß** die vorderseitig am Verdeckkastendeckel (8) vorgesehene Schließvorrichtung (10) von zwei jeweils ein Gegenlager (24, 24') und einen Fanghaken (25, 25') aufweisenden Baugruppen gebildet ist, von denen die eine als Verbindung zum Verdeckstoffspannbügel (9) und die andere als Verbindung zur Fahrzeugkarosserie vorgesehen ist.

17. Cabriolet-Fahrzeug nach dem Anspruch 16, **dadurch gekennzeichnet, daß** die Gegenlager (24, 24') der beiden Schließ-Baugruppen jeweils als Kulissenführungen ausgebildet sind, in denen die Fanghaken (25, 25') während der Schub-Bewegungsphase (F, F') geführt sind.

18. Cabriolet-Fahrzeug nach einem der Ansprüche 16 bis 17, **dadurch gekennzeichnet, daß** die Schließ-Baugruppen jeweils mit zumindest einem die Position des Fanghakens (25, 25') erfassenden Tastsensor versehen sind.

19. Cabriolet-Fahrzeug nach einem der Ansprüche 16 bis 18, **dadurch gekennzeichnet, daß** die Gegenlager (24, 24') im Bereich der Kulissenführung einstellbare Führungsbahnen aufweisen.

## Claims

1. A convertible vehicle, comprising a retractable hood, in particular a foldable hood (2), a hood compartment (6) receiving said hood (2) in its open position and being closable by a hood compartment cover (8) extending in the rear contour of the vehicle body, which hood compartment cover (8) is, on the one hand, pivotally supported on the vehicle body by at least one hinge device (7) with a support part (15) and, on the other hand, cooperates towards the foldable hood (2) with at least one closing device (10) which is provided in the region of a peripheral hood-fabric tensioning bow (9) of the hood (2) and in the region of which the hood compartment cover (8) can be locked with the hood-fabric tensioning bow (9) by a pivoting and pushing movement or unlocked in the opposite direction, **characterised in that** at least one lifting drive (11) is provided as a drive for the hood compartment cover (8), said lifting drive (11) being supported at a distance (A) from the hinge device (7) and pivotally connected to the hood compartment cover (8), said lifting drive (11) further comprising a hinge joint (17) connecting it to the lower rear area of the vehicle body and allowing said lifting drive (11) to be pivoted about a vertical axis (P), and **in that** the hood compartment cover (8) is provided to pivot (arrow D, arrow K) with respect to the support part (15) in the region of the hinge device (7) such that, in a first phase of movement, a lifting force (B) is introduced into the hood compartment cover via the lifting drive (11), at the same time disengaging (arrow F) components, previously engaged in the region of a closing device (10) in a connecting position, from their holding position **in that** a pivoting and pushing movement (arrows D, K) is introduced by the hood compartment cover (8) in the region of the hinge device (7) when continuing the lifting movement.

2. The convertible vehicle according to claim 1, **characterised in that** the lifting drive (11) is articulated to the hood compartment cover (8) via an adjustment member (12).

3. The convertible vehicle according to claim 1 or 2, **characterised in that** the hood compartment cover (8) and the support part (15) can pivot jointly and relative to each other.

4. The convertible vehicle according to any one of claims 2 to 3, **characterised in that** the hood compartment cover (8) is displaceable on a path of movement (D, G, K, K') substantially determined by the adjustment member (12) of the lifting drive (11) and the support part (15) of the hinge device (7).

5. The convertible vehicle according to any one of claims 2 to 4, **characterised in that** each guide unit formed by the adjustment member (12) and the hinge device (7) comprises at least three joints, wherein an articulation (13) of the lifting drive (11) to the adjustment member (12) supporting the hood compartment cover (8), a pivoting connection (14) of the hood compartment cover (8) to the support part (15) of the hinge device (7) as well as a pivoting support (16) provided for the support part (15) on the side of the hinge device (7) are provided as a serial arrangement of joints.

6. The convertible vehicle according to claim 5, **characterised in that** the serial arrangement comprises more than three jointly acting joints (13, 14, 16, 17) and said joints (13, 14, 16, 17) define partial paths of movement (D, E, F, G, K, K') of the articulated kinematic mechanism.

7. The convertible vehicle according to any one of claims 1 to 6, **characterised in that** the lifting drive (11), which has a lifting axis (H), is supported in the lower rear region of the vehicle body by a hinge joint (17) allowing it to be pivoted (arrow C) about a vertical support axis (P).

8. The convertible vehicle according to claim 5, **characterised in that** the lifting drive (11) is held in a pivoting manner at its end opposite the hinge joint (13) with the adjustment member (12).

9. The convertible vehicle according to claim 7 or 8, **characterised in that** the lifting drive (11) can pivot in parallel with the median longitudinal plane (M) of the vehicle.

10. The convertible vehicle according to claim 9, **characterised in that** the hood compartment cover (8) comprises, as the lifting drive (11), at least one hydraulic cylinder (20) which is articulated to a lever arm (18) provided as the adjustment member (12), said lever arm (18) being in turn connected to the bottom surface of the hood compartment cover (8) in a stationary manner.

11. The convertible vehicle according to claim 10, **characterised in that** the lever arm (18) provided with the articulated lifting drive (11) is supported on the hood compartment cover (8) in the area between the front closing device (10) and the rear hinge device (7).

12. The convertible vehicle according to any one of claims 1 to 11, **characterised in that** the hinge device (7) comprises, as the support part (15) supporting the hood compartment cover (8) in an articulated manner, an L-shaped pivoting lever (21), which can be placed in contact with a stop (22) in the opening phase (path D) and can be pivoted away from said stop (22) in the closing phase.

13. The convertible vehicle according to any one of claims 1 to 12, **characterised in that** two phases of movement (D and G), which merge into each other in a substantially continuous manner, can be conveyed to the hood compartment cover (8) during activation of the lifting drive (11).

14. The convertible vehicle according to any one of claims 1 to 13, **characterised in that** the respective movement of the hood compartment cover (8) in the region of the closing device(s) (10) provided for the hood-fabric tensioning bow (9) is effective, at least phase-wise, as a pushing movement (F, F') locking or unlocking it (them).

15. The convertible vehicle according to any one of claims 1 to 14, **characterised in that** each guide unit formed by the lifting drive (11) and the hinge device (7) cooperates synchronously, at least phase-wise, with the displaceable parts of the closing devices (10) during the opening or closing movement.

16. The convertible vehicle according to any one of claims 1 to 15, **characterised in that** the closing device (10) provided at the front of the hood compartment cover (8) is formed by two assemblies, each comprising a counter-bearing (24, 24') and a catch hook (25, 25'), one of said assemblies being provided as a connection to the hood-fabric tensioning bow (9) and the other as a connection to the vehicle body.

17. The convertible vehicle according to claim 16, **characterised in that** the counter-bearings (24, 24') of the two locking assemblies are each provided as guiding slots in which the catch hooks (25, 25') are guided during the pushing movement phase (F, F').

18. The convertible vehicle according to any one of claims 16 to 17, **characterised in that** the locking assemblies are each provided with at least one tactile sensor detecting the position of the catch hook (25, 25').

19. The convertible vehicle according to any one of claims 16 to 18, **characterised in that** the counter-bearings (24, 24') comprise adjustable guide paths in the region of the guide slot.

## Revendications

1. Véhicule cabriolet, comprenant une capote escamotable, notamment une capote pliable (2), un compartiment de capote (6) destiné à recevoir ladite capote (2) en position d'ouverture et pouvant être fermé par un couvercle (8) du compartiment de capote qui s'étend dans le contour arrière de la carrosserie, ce couvercle (8) du compartiment de capote étant d'une part supporté à pivotement sur la carrosserie par au moins un dispositif de charnière (7) avec un membre de support (15) et coopérant d'autre part, vers la capote pliable (2), avec au moins un dispositif de fermeture (10) qui est prévu dans la région d'un étrier tendeur de capote (9) périphérique pour la capote (2), le couvercle (8) du compartiment de capote pouvant être verrouillé, dans la région du dispositif de fermeture (10), avec l'étrier tendeur de capote (9) par un mouvement de pivotement et de poussée ou déverrouillée dans la direction opposée, **caractérisé en ce que** l'on prévoit au moins un entraînement de levage (11) en tant qu'entraînement pour le couvercle (8) du compartiment de capote, ledit entraînement de levage (11) étant supporté à une distance (A) dudit dispositif de charnière (7) et étant relié à pivotement au couvercle (8) du compartiment de capote, cet entraînement de levage (11) comprenant une articulation (17) reliant celui-ci à la région inférieure de la carrosserie et permettant son pivotement autour d'un axe vertical (P), et **en ce que** le couvercle (8) du compartiment de capote est réalisé à pivotement (flèche D, flèche K) par rapport au membre de support (15) dans la région du dispositif de charnière (7) de manière à introduire, dans une première phase de mouvement, une force de levage (B) dans le couvercle du compartiment de capote au moyen de l'entraînement de levage (11), desserrant en même temps (flèche F) de leur position de retenue des composants, qui étaient engrenés les uns dans les autres dans la région d'un dispositif de fermeture (10) en position de liaison, en introduisant un mouvement de pivotement et de poussée (flèches D, K) par le couvercle (8) du compartiment de capote dans la région du dispositif de charnière (7) lors de la continuation du mouvement de levage.

2. Véhicule cabriolet selon la revendication 1, **caractérisé en ce que** l'entraînement de levage (11) est articulé au couvercle (8) du compartiment de capote au moyen d'un élément de réglage (12).

3. Véhicule cabriolet selon la revendication 1 ou 2, **caractérisé en ce que** le couvercle (8) du compartiment de capote et le membre de support (15) peuvent être pivotés ensemble et l'un par rapport à l'autre.

4. Véhicule cabriolet selon l'une quelconque des revendications 2 à 3, **caractérisé en ce que** le couvercle (8) du compartiment de capote est déplaçable sur un chemin de mouvement (D, G, K, K') sensiblement déterminé par l'élément de réglage (12) de l'entraînement de levage (11) et le membre de support (15) du dispositif de charnière (7).

5. Véhicule cabriolet selon l'une quelconque des revendications 2 à 4, **caractérisé en ce que** chaque unité de guidage formée par l'élément de réglage (12) et le dispositif de charnière (7) comprend au moins trois articulations, une articulation (13) de l'entrainement de levage (11) sur l'élément de réglage (12) supportant le couvercle (8) du compartiment de capote, une liaison pivotante (14) du couvercle (8) du compartiment de capote au membre de support (15) du dispositif de charnière (7) ainsi qu'un support pivotant (16) pour le membre de support (15) du côté du dispositif de charnière (7) étant prévus de manière à réaliser un arrangement séquentiel d'articulations.

6. Véhicule cabriolet selon la revendication 5, **caractérisé en ce que** l'arrangement séquentiel comprend plus de trois articulations (13, 14, 16, 17) agissant ensemble et définissant des chemins de mouvement partiels (D, E, F, G, K, K') de la cinématique réalisée par ces articulations.

7. Véhicule cabriolet selon l'une quelconque des revendications 1 à 6, **caractérisé en ce que** l'entraînement de levage (11) présentant un axe de levage (H) est supporté dans la région inférieure arrière de la carrosserie par une articulation (17) permettant son pivotement (flèche C) autour d'un axe vertical de support (P).

8. Véhicule cabriolet selon la revendication 5, **caractérisé en ce que** l'entraînement de levage (11) est tenu à pivotement à son extrémité en face de l'articulation (13) sur élément de réglage (12).

9. Véhicule cabriolet selon la revendication 7 ou 8, **caractérisé en ce que** l'on peut pivoter l'entraînement de levage (11) parallèlement au plan longitudinal médian (M) du véhicule.

10. Véhicule cabriolet selon la revendication 9, **caractérisé en ce que** le couvercle (8) du compartiment de capote comprend, en tant qu'entraînement de levage (11), au moins un vérin hydraulique (20) qui est articulé sur un bras de levier (18) constituant l'élément de réglage (12), ledit bras de levier (18) étant relié d'autre part, de manière stationnaire, à la face inférieure du couvercle (8) du compartiment de capote.

11. Véhicule cabriolet selon la revendication 10, **caractérisé en ce que** le bras de levier (18), sur lequel est articulé l'entraînement de levage (11), est supporté sur le couvercle (8) du compartiment de capote dans la région entre le dispositif de fermeture (10) situé en avant et le dispositif de charnière (7) situé en arrière.

12. Véhicule cabriolet selon l'une quelconque des revendications 1 à 11, **caractérisé en ce que** le dispositif de charnière (7) comprend, en tant que membre de support (15) supportant le couvercle (8) du compartiment de capote de manière articulée, un levier de pivotement sous forme de L (21), que l'on peut mettre en contact avec une butée (22) pendant la phase d'ouverture (chemin D) et que l'on peut éloigner de ladite butée (22) par pivotement pendant la phase de fermeture.

13. Véhicule cabriolet selon l'une quelconque des revendications 1 à 12, **caractérisé en ce que** deux phases de mouvement (D et G), l'une passant à l'autre de manière sensiblement continue, peuvent être transmises au couvercle (8) du compartiment de capote lors de l'activation de l'entraînement de levage (11).

14. Véhicule cabriolet selon l'une quelconque des revendications 1 à 13, **caractérisé en ce que** le mouvement respectif du couvercle (8) du compartiment de capote dans la région du (des) dispositif(s) de fermeture (10) destiné(s) pour l'étrier tendeur de capote (9) est effectif, au moins par phases, en tant que mouvement de poussée (F, F') verrouillant ou déverrouillant celui-ci (ceux-ci).

15. Véhicule cabriolet selon l'une quelconque des revendications 1 à 14, **caractérisé en ce que** chaque unité de guidage constitué par l'entraînement de levage (11) et le dispositif de charnière (7) coopère de manière synchrone, au moins par phases, avec les éléments déplaçables des dispositifs de fermeture (10) lors du mouvement d'ouverture ou de fermeture.

16. Véhicule cabriolet selon l'une quelconque des revendications 1 à 15, **caractérisé en ce que** le dispositif de fermeture (10) disposé sur la face avant du couvercle (8) du compartiment de capote est constitué par deux ensembles respectivement comprenant une contre-portée (24, 24') et un crochet d'arrêt (25, 25'), l'un desdits ensembles étant réalisé en tant que liaison avec l'étrier tendeur de capote (9) et l'autre en tant que liaison avec la carrosserie.

17. Véhicule cabriolet selon la revendication 16, **caractérisé en ce que** chacune des contre-portées (24, 24') des deux ensembles de fermeture est réalisée en tant que guidage à coulisse dans lesquels les crochets d'arrêt (25, 25') sont guidés pendant la phase de mouvement de poussée (F, F').

18. Véhicule cabriolet selon l'une quelconque des revendications 16 à 17, **caractérisé en ce que** chacun des ensembles de fermeture présente au moins un capteur tactile détectant la position du crochet d'arrét (25, 25').

19. Véhicule cabriolet selon l'une quelconque des revendications 16 à 18, **caractérisé en ce que** les contre-portées (24, 24') comprennent des glissières réglables dans la région du guidage à coulisse.
